(19) Europäisches Patentamt
European Patent Office
Office européen des brevets

(11) **EP 3 345 782 A1**

(12) **EUROPEAN PATENT APPLICATION**
published in accordance with Art. 153(4) EPC

(43) Date of publication:
**11.07.2018 Bulletin 2018/28**

(51) Int Cl.:
**B60L 3/00** *(2006.01)* **B60L 15/20** *(2006.01)*

(21) Application number: **16841791.3**

(86) International application number:
**PCT/JP2016/075182**

(22) Date of filing: **29.08.2016**

(87) International publication number:
**WO 2017/038759 (09.03.2017 Gazette 2017/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **03.09.2015 JP 2015173565**

(71) Applicant: **NTN Corporation**
**Osaka-shi, Osaka 550-0003 (JP)**

(72) Inventor: **MAKINO, Tomoaki**
**Iwata-shi**
**Shizuoka 438-8510 (JP)**

(74) Representative: **Hirsch & Associés**
**137, rue de l'Université**
**75007 Paris (FR)**

(54) **VEHICULAR MOTOR DRIVE DEVICE AND VEHICLE HAVING THE SAME MOUNTED THEREON**

(57)  A failure occurrence determiner may include a rotor angle measurement module that calculates a measurement value of an angular phase of a motor rotor with respect to a wheel, based on a rotational angle of the motor rotor that is detected by an angle sensor equipped to an electric motor and rotational information of the wheel that is detected by a speed sensor. It may also include a rotor angle estimation module that calculates an estimate value of the angular phase of the motor rotor with respect to the wheel, based on a motor torque command value for a motor controller. It may also include a failure determination module that determines that a failure has occurred in a motor drive device, if a difference between the measurement value and the estimate value of the angular phase of the motor rotor is equal to or greater than a threshold.

Fig. 1

EP 3 345 782 A1

**Description**

CROSS REFERENCE TO THE RELATED APPLICATION

This application is based on and claims Convention priority to Japanese patent application No. 2015-173565, filed September 3, 2015, the entire disclosure of which is herein incorporated by reference as a part of this application.

BACKGROUND OF THE INVENTION

(Field of the Invention)

The present invention relates to a vehicular motor drive device with motor drive devices that are configured to be mounted above suspensions or in a sprung mass of a vehicle to independently drive left and right drive wheels, respectively, and also relates to a vehicle having the same mounted thereon.

(Description of Related Art)

In the past, for a vehicle with a plurality of motor drive devices to independently drive left and right drive wheels, respectively, technologies of detecting performance drop or failure during the vehicle travel have been proposed (see, for example, Patent Documents 1 and 2). According to the proposal in the Patent Document 1, in-wheel motor drive devices are used as the motor drive devices, and the amount of torque fluctuation of a transmitted torque can be estimated based on a rotational speed, or number of rotation per unit time, of a wheel, the rotational speed of a motor, a load acting on a vehicle axle support bearing assembly, and a motor current in order to determine the presence or absence of possible abnormality. According to the proposal in the Patent Document 2, the temperatures of motor stators may be monitored, and the occurrence of abnormality can be determined based on one of the temperatures of the motor stators being higher than the temperatures of the rest of the stators.

[Related Document]

[Patent Document]

[Patent Document 1] JP Laid-Open Patent Publication No. 2012-178903

[Patent Document 2] JP Laid-Open Patent Publication No. 2014-075867

A vehicle, when travelling using a plurality of motor drive devices that independently drive respective drive wheels, may exhibit unstable vehicle behaviors depending on or in response to the breakage modes of the motor units. For instance, when two motors are operating to drive left and right wheels and if one of the motors suddenly becomes inoperable due to damage, a yaw moment that is not intended by a driver may abruptly act on the vehicle, potentially disrupting the vehicle behaviors to a substantial extent. To avoid such an unstable condition, it may be necessary to detect the occurrence of damage before it progresses into a more severe damage and to carry out proper vehicle control based on the detection, in order to ensure stable vehicle behaviors.

In the case of detecting breakage based on motor temperature as in the Patent Document 2, it may be challenging to detect failure at a proper timing because there is a temporal deviation between the occurrence of breakage and the pronounced elevation of temperature. In the case of detecting failure based on estimation of a transmitted torque as in the Patent Document 1, rapid failure detection can be possible, but a dedicated, vehicle axle support bearing assembly that is itself capable of load detection may be required according to the conventional art described in the same document, thereby leading to cost increase.

SUMMARY OF THE INVENTION

An object of the present invention is to provide a vehicular motor drive device which can enable rapid detection of the occurrence of failure of, for example, a motor in a motor drive device without requiring the provision of a dedicated sensor, etc. and which can thus reduce cost, as well as to provide a vehicle having the same mounted thereon.

To facilitate the understanding of the present invention, the following description of the present invention is expediently supplemented with reference signs from embodiments thereof.

The first vehicular motor drive device according to the present invention includes: a plurality of motor drive devices 1 that include respective electric motors 2, with the motor drive devices 1 being configured to be mounted on a vehicle in such a way to transmit rotation of each of the electric motors 2 via a drive shaft 4 to a corresponding left or right wheel of the vehicle; and a failure occurrence determiner 15 that is configured to detect an occurrence of failure in the motor drive devices 1. The failure occurrence determiner 15 includes: a rotor angle measurement module 16 that is configured to calculate a measurement value of an angular phase of a motor rotor with respect to the corresponding wheel 20, based on a rotational angle of the motor rotor that is detected by an angle sensor 21 equipped to the respective electric motors 2 and rotational information of the corresponding wheel that is detected by a speed sensor 22; a rotor angle estimation module 17 that is configured to calculate an estimate value of the angular phase of the motor rotor of the corresponding electric motor 2 with respect to the corresponding wheel 20, based on a motor torque command value for a motor controller 12 that drives the corresponding electric motor 2; a difference calculation module 18 that is configured to calculate a difference between the measurement value of the angular phase of the motor rotor and the estimate value of the angular phase of the motor rotor; and a failure determination module 19 that is configured to determine that a failure has occurred in the corresponding motor drive device 1, if an absolute value of the difference is equal to or greater than a threshold.

It should be noted that the motor drive device 1 may only include an electric motor 2 without a speed reducer 3.

According to such a configuration, a difference between the measurement value of the angular phase of the motor rotor with respect to the corresponding wheel and the estimate value of the angular phase of the motor rotor with respect to the corresponding wheel, with the estimate value being calculated based on the motor torque command value, may be calculated so that the difference can be compared with the threshold to determine the occurrence of failure. This can enable rapid detection of the occurrence of failure of, for example, a motor in the motor drive device without requiring the provision of a dedicated sensor, etc. and can thus reduce cost.

The second vehicular motor drive device according to the present invention differs from the first vehicular motor drive device in that the rotor angle estimation module 17 uses a modified scheme for estimation. That is, the rotor angle estimation module 17 may be configured to calculate the estimate value of the angular phase of the motor rotor with respect to the corresponding wheel 20, based on the motor torque command value for the motor controller 12 that drives the corresponding electric motor 2, a moment of inertia of the motor rotor, a torsional rigidity of a drive train, a play in the drive train, and a rotational acceleration of the motor rotor.

The overview of such a modified, second vehicular motor drive device is as follows:

It includes: a plurality of motor drive devices 1 that include respective electric motors 2, with the motor drive devices 1 being configured to be mounted on a vehicle in such a way to transmit rotation of each of the electric motors 2 to a corresponding left or right wheel of the vehicle; and a failure occurrence determiner 15 that is configured to detect an occurrence of failure in the motor drive devices 1. The failure occurrence determiner 15 includes: a rotor angle measurement module 16 that is configured to calculate a measurement value of an angular phase of a motor rotor with respect to the corresponding wheel 20, based on a rotational angle of the motor rotor that is detected by an angle sensor 21 equipped to the respective electric motors 2 and rotational information of the corresponding wheel that is detected by a speed sensor 22; a rotor angle estimation module 17 that is configured to calculate an estimate value of the angular phase of the motor rotor with respect to the corresponding wheel 20, based on a motor torque command value for a motor controller 12 that drives the corresponding electric motor 2, a moment of inertia of the motor rotor, a torsional rigidity of a drive train, a play in the drive train, and a rotational acceleration of the motor rotor; a difference calculation module 18 that is configured to calculate a difference between the measurement value of the angular phase of the motor rotor and the estimate value of the angular phase of the motor rotor; and a failure determination module 19 that is configured to determine that a failure has occurred in the corresponding motor drive device, if an absolute value of the difference is equal to or greater than a threshold.

In the case of the second vehicular motor drive device, an estimate value of the angular phase of the motor rotor with respect to the corresponding wheel may be calculated based on a motor torque command value, a moment of inertia of the motor rotor, a torsional rigidity of the drive train, a play in the drive train, and a rotational acceleration of the motor rotor, and a difference between the measurement value of the angular phase of the motor rotor with respect to the corresponding wheel and an estimate value of the angular phase of the motor rotor with respect to the corresponding wheel may be calculated so that the difference can be compared with the threshold to determine the occurrence of failure. This can enable rapid detection of the occurrence of failure of, for example, a motor in the motor drive device without requiring the provision of a dedicated sensor, etc. and can thus reduce cost.

In any one of the first and second vehicular motor drive devices according to the present invention, the failure occurrence determiner 15 may be provided or installed in an electronic control unit 11 that performs general control of the vehicle. By implementing the failure occurrence determiner 19 in the electronic control unit 11 that serves for general control of the vehicle, the failure determination can make use of high speed processing of the electronic control unit 11 and can therefore eliminate the need for the provision of a processor dedicated to failure determination, thereby simplifying the device configuration and suppressing cost increase.

Also, in any one of the first and second vehicular motor drive devices according to the present invention, the failure occurrence determiner 15 may be provided in the motor controller 12, and the vehicular motor drive device may further include a failure determination information output module 26 that is also provided in the motor controller 12, with the failure determination information output module 26 being configured to output failure determination information to a component external to the motor controller 12, and with the failure determination information representing a determination result provided by the failure occurrence determiner 15. By implementing the failure occurrence determiner 15 in the motor controller 12, the failure determination can make use of the processing of the motor controller 12 and can therefore eliminate the need for the provision of a processor dedicated to failure determination, thereby simplifying the device configuration and suppressing cost increase. Since the failure determination information output module 26 is provided to produce an output to the external component, a driver, for example, can be informed of the occurrence of failure even though the failure occurrence determiner 15 is provided in the motor controller 12.

When the failure determination information output module 26 is provided, the failure determination information output module 26 may be configured to vary the failure determination information to be outputted to the eternal component, in accordance with a magnitude of the absolute value of the difference between the measurement value and the estimate value of the angular phase of the motor rotor with respect to the corresponding wheel 20. By varying the failure determination information to be outputted to the external component in accordance with the magnitude of the absolute value of the difference, a driver, for example, can be informed of the magnitude of a failure.

In any one of the first and second vehicular motor drive devices according to the present invention, the threshold may be a product of the estimate value of the angular phase of the motor rotor with respect to the corresponding wheel 20 multiplied by a constant, with the constant being a value in the range of 0.01 to 0.2. Simulation results show that, by designing the threshold to be a product of the estimate value of the angular phase of the motor rotor with respect to the corresponding wheel 20 multiplied by a constant with the constant being a value in the range of 0.01 to 0.2, failure determination for the respective one of the motor drive devices 1 can be performed with precision.

A vehicle with motor drive devices mounted thereon, according to the present invention, may be a vehicle having the vehicular motor drive device that is designed in accordance with any one of the aforementioned configurations according to the present invention, mounted thereon. Such a vehicle having a vehicular motor drive device that is designed according to the present invention may provide the advantage of being able to perform rapid detection of the occurrence of failure of, for example, a motor in the motor drive device without requiring the provision of a dedicated sensor, etc. and of being able to, thus, reduce cost.

Any combination of at least two features disclosed in the appended claims and/or the specification and/or the accompanying drawings should be construed as being included within the scope of the present invention. In particular, any combination of at least two claims from the appended claims should be equally construed as being included within the scope of the present invention.

BRIEF DESCRIPTION OF THE DRAWINGS

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference signs are used to denote like parts or corresponding parts throughout the different figures, and:

Fig. 1 is a block diagram illustrating a general concept of a vehicular motor drive device, in accordance with an embodiment of the present invention;
Fig. 2 shows a schematic plan view of an example of an automotive vehicle having the vehicular motor drive device mounted thereon;
Fig. 3 shows a longitudinal sectional view of an example of motor drive devices of the vehicular motor drive device;
Fig. 4 is a schematic diagram illustrating how one of the motor drive devices may be coupled to a corresponding wheel;
Fig. 5 is a diagram illustrating a simplified model of one of the motor drive devices;
Fig. 6 is a schematic diagram illustrating how determination of the occurrence of failure may be carried out during forward travel, in the vehicular motor drive device;
Fig. 7 is a schematic diagram illustrating how determination of the occurrence of failure may be carried out during reverse travel, in the vehicular motor drive device;
Fig. 8 is a block diagram illustrating a general concept of a rotor angle estimation module in the vehicular motor drive device; and
Fig. 9 is a block diagram illustrating a general concept of a vehicular motor drive device, in accordance with another embodiment of the present invention.

DESCRIPTION OF EMBODIMENTS

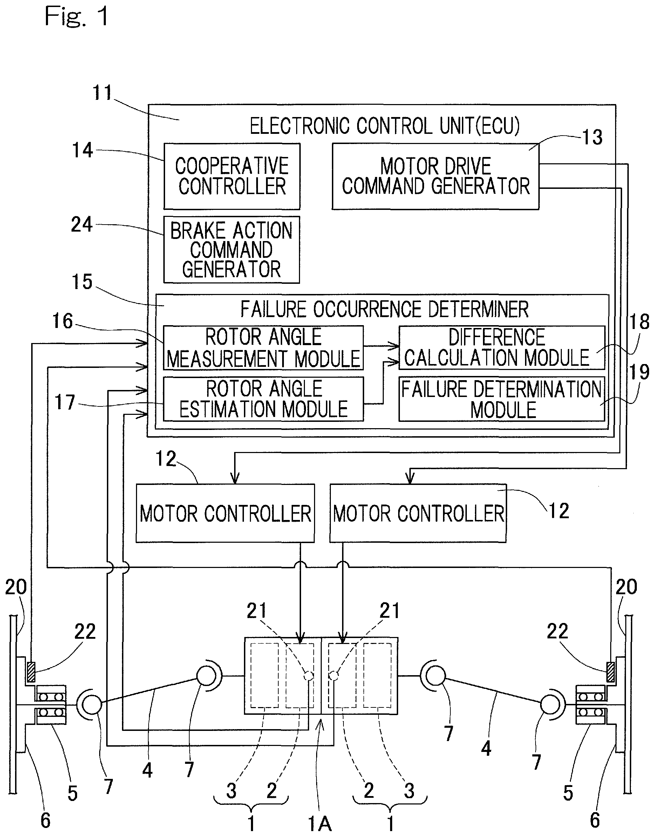

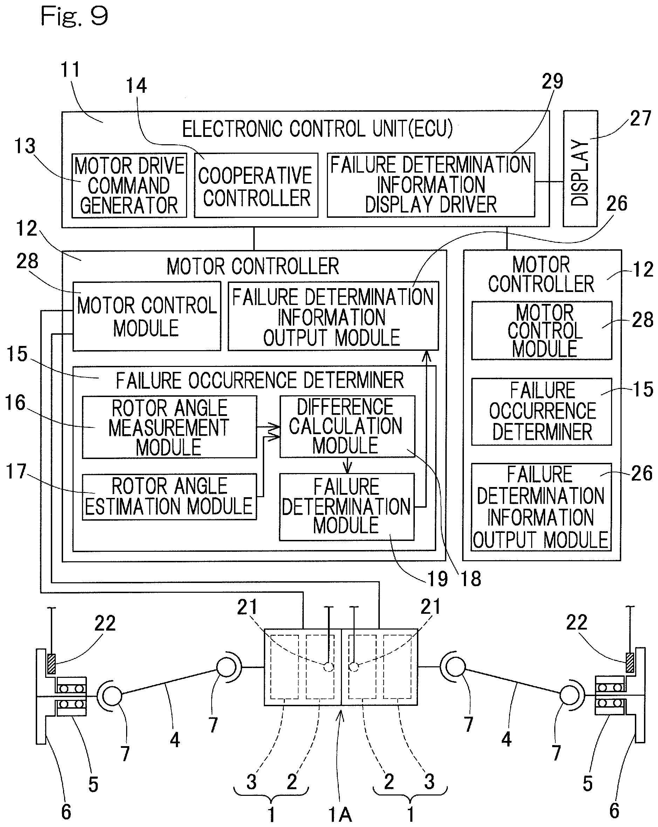

A vehicular motor drive device in accordance with an embodiment of the present invention will be described in connection with the accompanying drawings. Referring to Fig. 1, the illustrated vehicular motor drive device includes a plurality of motor drive devices 1 and a failure occurrence determiner 15 that is configured to detect an occurrence of failure in the motor drive devices 1. Although the failure occurrence determiner 15 is provided in an electronic control unit 11 in the illustrated embodiment, it may instead be provided in a motor controller 12 as in the embodiment that will be discussed later in connection with Fig. 9.

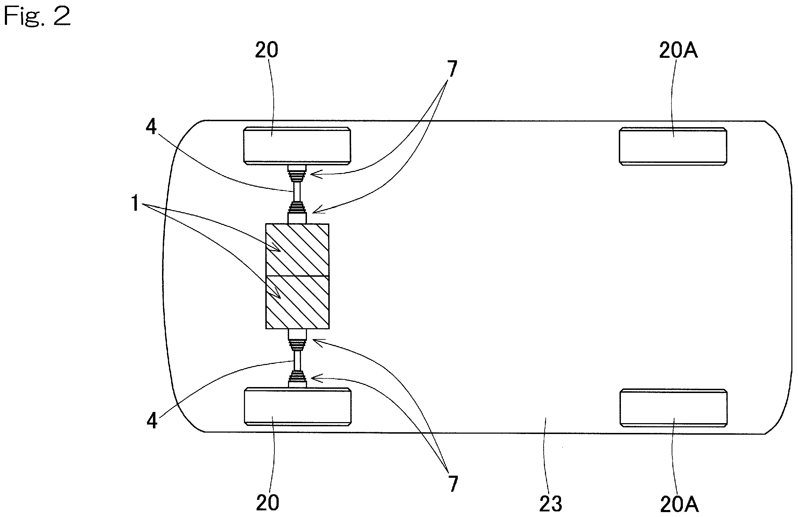

Each of the motor drive devices 1 in the illustrated example includes a motor 2 and a speed reducer or reduction gear 3. The motor drive devices 1 can be mounted on a chassis of a vehicle body of a vehicle 23 (Fig. 2), such that the output of each of the motor drive devices 1 may be transmitted via a drive shaft 4 to a corresponding left or right wheel 20 that serve as drive wheels. Each of the wheels 20 may be attached to a hub unit 6 of a wheel support bearing assembly 5 (Fig. 1) such as a hub bearing, so that it is supported by the wheel support bearing assembly 5. The drive shaft 4 can be coupled, at opposite ends thereof, to an output shaft of the corresponding motor drive device 1 and to the hub unit 6 of the wheel support bearing assembly 5 via respective constant velocity joints 7.

The wheels 20 that can be driven by the motor drive devices 1 may be front wheels of, for example, an automobile (i.e., the vehicle) such as shown in Fig. 2. Wheels 20A in the form of rear wheels may serve as driven wheels.

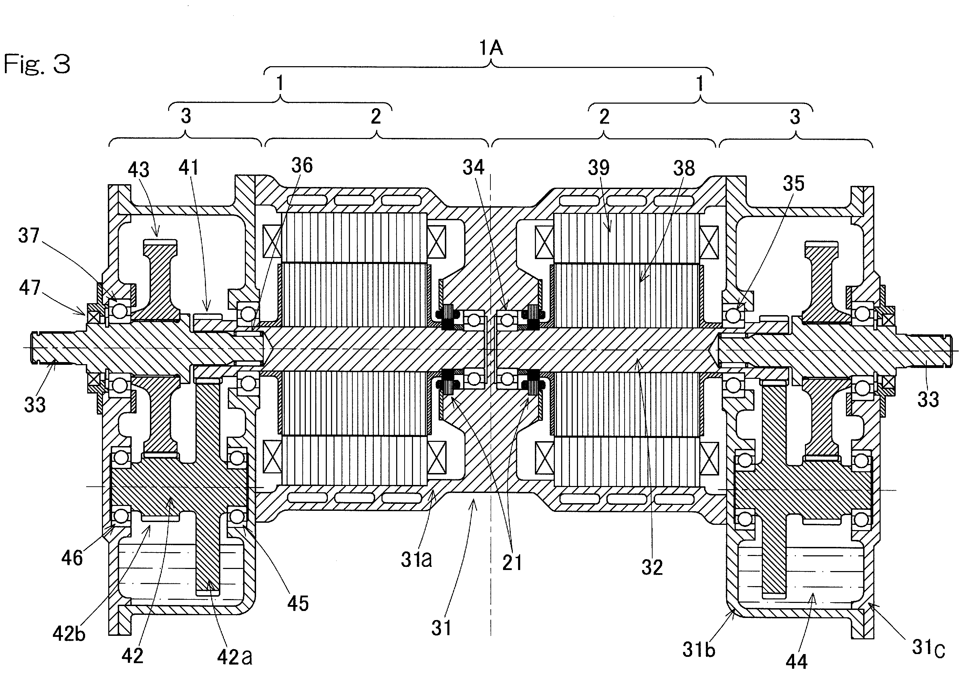

Fig. 3 shows a particular example of the motor drive devices 1. In the illustrated example, two motor drive devices 1 and 1 may be disposed in a common drive device housing 31 so as to form an integrated motor drive device 1A, and in the drive device housing 31, those motor drive devices 1 and 1 can be positioned so as to be spaced apart from and line-symmetric to each other and so as to have respective motor rotor shafts 32 that are aligned coaxial with each other. Both of the motor drive devices 1 and 1 can be of identical designs except that they are oriented in opposite left and right directions. Each of the motor drive devices 1 and 1 may include the motor 2 and the speed reducer 3, with the motor 2 being located on a side facing the vehicle center and with the speed reducer 3 being located on a side facing the vehicle edge. An output shaft 33 of each of the motor drive devices 1 can also serve as an output shaft of the speed reducer 3 and may be disposed so as to be coaxial with a corresponding motor rotor shaft 32. The respective motor rotor shafts 32 may be supported at opposite ends thereof by respective bearings 34 and 35 that are disposed in the drive device housing 31. The output shaft 33 may be supported at opposite ends thereof by respective bearings 36 and 37, with the bearing 36 being mounted to an inner periphery of one of the opposite ends - located on the side facing the vehicle edge - of the respective motor rotor shafts 32 and with the bearing 37 being mounted to an end face portion - located on the side facing the vehicle edge - of the drive device housing 31.

The electric motor 2, which may for example comprise a synchronous motor, may include a motor rotor 38 and a motor stator 39, with the motor rotor 38 being mounted on an outer periphery of a respective motor rotor shafts 32 and with the motor stator 39 being mounted on an inner periphery of the drive device housing 31. The motor rotor 38 may be formed of laminated steel sheets and permanent magnets (not shown), etc.. The motor stator 39 may be formed of a core and coils. The angle sensors 21 that can each detect a rotational angle of the motor stator 39 may be disposed in the drive device housing 31, in which the respective angle sensor 21 is located adjacent to one of the opposite ends - located on a side facing the vehicle interior (i.e., the side facing the vehicle center) - of the respective motor rotor shaft 32.

The speed reducer 3, which may for example comprise a gear train, may include an input gear 41 associated with the respective motor rotor shaft 32, a gear 42a associated with an intermediate shaft 42 on a larger diameter side thereof so as to meshingly engage the input gear 41, a gear 42b associated with the intermediate shaft 42 on a smaller diameter side thereof, and an output gear 43 associated with the output shaft 33 so as to meshingly engage the gear 42b. The intermediate shaft 42 may be positioned so as to extend parallel to the output shaft 33, supported by two bearings 45 and 46 that are disposed in the drive device housing 31.

In particular, the drive device housing 31 may include a motor housing 31a that extends over and covers two electric motors 2 and 2, two speed reducer main housings 31b that cover respective speed reducers 3, and speed reducer end face housings 31c that form respective end face portions of the drive device housing 31. One of the speed reducer main housings 31b and a one of the speed reducer end face housings 31c may cooperate to form a speed reducer housing, inside which lubricant oil 44 is stored. The intermediate shaft 42 may be positioned so as to extend parallel to the output shaft 33, supported by the two bearings 45 and 46 that are disposed in the speed reducer housing. Seal members 47 such as oil seals that can serve to prevent possible leakage of the lubricant oil 44 may each be disposed at a portion of the respective speed reducer end face housings 31c where the output shaft 33 penetrates.

A vehicle control system, in which the vehicular motor drive device can be embodied, will be described as follows in connection with Fig. 1. The vehicle control system may be formed of a main, electronic control unit (ECU) 11 and a plurality of (two in the illustrated example) motor controllers 12 that drive corresponding electric motors 2. The electronic control unit 11, which may be a unit that performs general control of the vehicle, may be provided by a computer and so on and may include a motor drive command generator 13, a cooperative controller 14 and a brake action command generator 24. Mainly, the motor drive command generator 13 may generate a driving command or a regenerative braking command according to the amount of operation of an accelerator operation unit such as an accelerator pedal and the amount of operation of a brake operation unit such as a brake pedal which are performed by a driver and may send it to the respective motor controllers 12. In addition, the motor drive command generator 13 may generate a command for changing the allocation and/or the magnitude of a braking command that is sent to the respective motor controllers 12, according to a steering angle of a steering wheel and/or the operation of an automated driving controller and an attitude controller, etc. (not shown), and may output it accordingly.

The cooperative controller 14 may perform such control that different commands from different controllers for the vehicle will be smoothly executed without conflicting each other. The brake action command generator 24 may allocate a braking command among different brake devices that are installed to the wheels 20 and 20A and that can serve as service brakes in the form of, for example, frictional brakes, according to the amount of operation of a brake operation unit such as the aforementioned brake pedal. The brake action command generator 24 may generate a braking command not only based on the brake operation unit but also based on a command from controller(s) (not shown) for safety enhancement and/or automated driving (or self-driving). The brake action command generator 24 may also serve the function of allocating or dividing an entire braking force to be effected in accordance with the amount of operation of the brake operation unit, between a first braking force by regenerative braking and a second braking force by the service brakes. Furthermore, the brake action command generator 24 may be provided in an electronic control unit (not shown) dedicated to a braking function which is distinct from the main, electronic control unit 11.

Each of the motor controllers 12 may convert a driving command, which is sent from the motor drive command generator 13 in the electronic control unit 11, into a driving current for the corresponding electric motor 2, and may be referred to as an inverter unit when the respective electric motors 2 comprises an AC motor. Each of the motor controllers 12, which may comprise such an inverter unit, may include, for example: a power circuitry that includes an inverter configured to convert a DC power from a battery into an AC power and that also includes a PWM controller configured to control an output current from the inverter; and a control circuitry that can perform follow-up control and/or efficiency control such as vector control. The inverter may be formed of, for example, a combination of semiconductor switching elements.

The electronic control unit 11 and each of the motor controllers 12 may be connected with each other via, for example, an intra-vehicle network (not shown) such as a CAN.

A vehicular motor drive device with the motor drive devices 1 of the aforementioned designs and a control system thereof (i.e., the aforementioned control system) may include, in the embodiment under discussion, a failure occurrence determiner 15 having the following configuration, with the failure occurrence determiner 15 being provided in the electronic control unit 11. The failure occurrence determiner 15 includes a rotor angle measurement module 16, a rotor angle estimation module 17, a difference calculation module 18 and a failure determination module 19.

The rotor angle measurement module 16 may calculate a measurement value of an angular phase of a motor rotor with respect to the corresponding wheel 20, based on a rotational angle of the motor rotor that is detected by the respective angle sensor 21 which is equipped to the respective electric motors 2 and on rotational information of the corresponding wheel that is detected by a speed sensor 22. The rotor angle estimation module 17 may calculate an estimate value of the angular phase of the motor rotor of the corresponding electric motor 2 with respect to the corresponding wheel 20, based on a motor torque command value for the corresponding motor controller 12 which drives the corresponding electric motor 2. The difference calculation module 18 may calculate a difference between the measurement value of the angular phase of the motor rotor and the estimate value of the angular phase of the motor rotor. The failure determination module 19 may determine that a failure has occurred in the corresponding motor drive device 1, if an absolute value of the difference is equal to or greater than a threshold.

The threshold may be, for example, a product of the estimate value of the angular phase of the motor rotor with respect to the corresponding wheel 20 multiplied by a constant, with the constant being a value in the range of 0.01 to 0.2.

It should be emphasized that, though the rotor angle estimation module 17 in the example just discussed is configured to perform calculation based on the motor torque command value, it may instead be configured to perform calculation in the following manner. That is, the rotor angle estimation module 17 may calculate the estimate value of the angular phase of the motor rotor with respect to the corresponding wheel 20, based on the motor torque command value for the respective one of the motor controllers 12 which drives the corresponding electric motor 2, a moment of inertia of the motor rotor, a torsional rigidity of a drive train, a play in the drive train, and a rotational acceleration of the motor rotor.

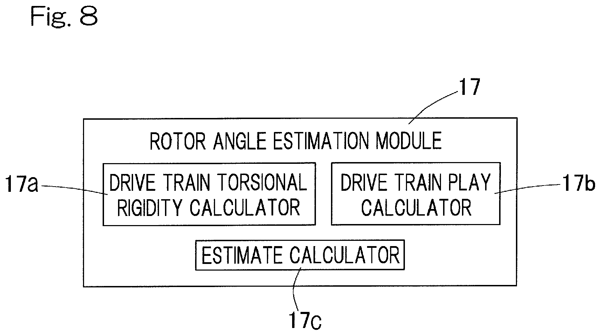

In this case, as shown in Fig. 8, the rotor angle estimation module 17 may include, for example, a drive train torsional rigidity calculator 17a configured to calculate the torsional rigidity of the drive train, a drive train play calculator 17b configured to calculate the play in the drive train, and an estimate calculator 17c. The estimate calculator 17c may be configured to calculate an estimate value of the angular phase of the motor rotor with respect to the corresponding wheel 20, based on a motor torque command value for the respective one of the motor controllers 12 which drives the corresponding electric motor 2, a moment of inertia of the motor rotor, the torsional rigidity of the drive train that is calculated by the drive train torsional rigidity calculator 17a, the play in the drive train that is calculated by the drive train play calculator 17b, and the rotational acceleration of the motor rotor.

The operation as well as the principle of such a configuration will be described together with some additional, supplemental explanations thereof. The vehicular motor drive device in this case is based on a vehicular motor drive device with a plurality of electric motors 2 that can be mounted on a vehicle body (chassis) in such a way to transmit the power of the motors via respective drive shafts 4 to respective wheels, and is also designed to determine failure of the device based mainly on an angle of a respective one of motor rotors and a rotational speed of the corresponding wheel.

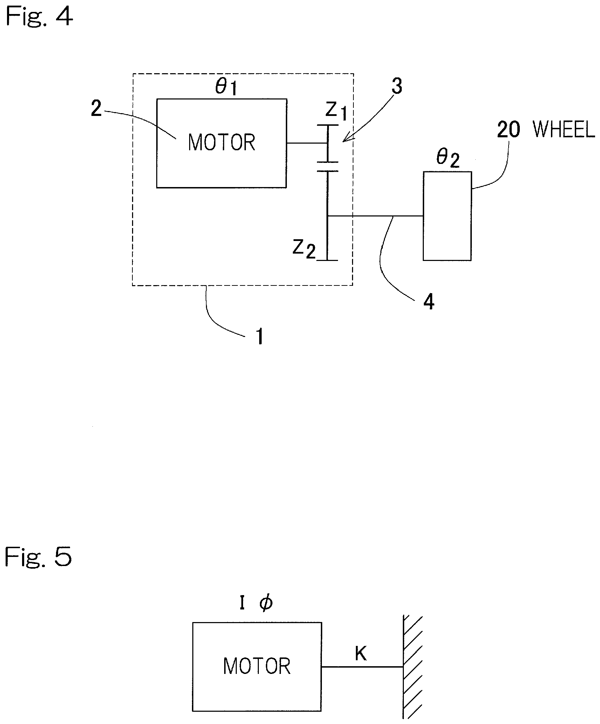

Fig. 4 schematically illustrates how one of the motor drive devices 1 may be coupled to the corresponding wheel 20. A rotational angle $\theta_1$ of a motor rotor and a rotational angle $\theta_2$ of a wheel at a time t can be expressed in the following equations:

$$\theta_1 = \omega_1 t \qquad (0 \leq \theta_1 \leq 2\pi)$$

$$\theta_2 = \omega_2 t - \varphi \qquad (0 \leq \theta_2 \leq 2\pi)$$

wherein $\omega_1$ indicates a rotational speed of the motor rotor, $\omega_2$ indicates a rotational speed of the wheel, and $\varphi$ indicates an angle of torsion of the drive train as a function of a transmitted torque. From the above equations, $\varphi$ can be expressed in the following formula:

[Math 1]

$$\varphi = \frac{\theta_1 - i_r \theta_2}{i_r} \qquad (1)$$

wherein $i_r$ indicates the reduction ratio of a portion of the speed reducer and can be expressed, for example, as $i_r = Z_2 / Z_1$ (gear ratio) in the case of a design that is illustrated in Fig. 4.

To assess the dynamic behaviors of the motor drive device 1 with the motor 2 and the speed reducer 3, the actual behaviors thereof can be evaluated with satisfactory accuracy by only considering the moment of inertia I of the motor rotor thereof - as long as damage determination is all that is needed. When considering only the moment of inertia of the motor rotor, the dynamic model that is illustrated in Fig. 4 can be seen as identical to the illustration of Fig. 5. It should be emphasized that the wheel is shown as a static system for convenience in Fig. 5 because it is only a torsional angle $\varphi$ of the motor rotor with respect to the wheel that is needed to be considered.

The equation of motion of the dynamic model that is illustrated in Fig. 5 is as follows:

[Math 2]

$$I\ddot{\varphi} + K\varphi = T_M$$

From this equation,

$$\varphi = \frac{T_M - I\ddot{\varphi}}{K} \qquad (2)$$

By defining a computational timestep $\Delta t$ and by defining $\varphi$ at a time $t = t_n = n\Delta t$ as $\varphi_n$,

$$\left( \varphi_n = \frac{T_M - I\ddot{\varphi}_{n-1}}{K} \qquad (2') \right)$$

In this context, $T_M$ indicates a motor torque, and K indicates a torsional rigidity of a drive train including the speed reducer and the drive shaft 4. A measurement value $\varphi a$ of the torsional angle $\varphi$ can be derived from the formula (1). Among the parameters of the formula (1), a rotational angle $\theta_1$ of the rotor can be obtained using the respective angle sensor (e.g., a resolver) 21 that are built-in for motor drive control purpose. On the other hand, a rotational angle $\theta_2$ of the wheel in the embodiment under discussion can be obtained based on rotational information of a wheel hub thereof, with the aid of a vehicle speed sensor 22 that is commonly used for ABS (Antilock Brake System) (see Fig. 1). Generally, a speed sensor for ABS purpose may include a combination of a target (pulser ring), with periodic concavities and convexities that is mounted on a hub unit which is associated with a wheel or the like, and of an electromagnetic detector, or a combination of a magnetic encoder, with periodically magnetized pattern(s) that is mounted on a hub unit, and of a magnetic sensor (e.g., a Hall effect sensor or a magnetoresistive element MR sensor), so that pulses can be outputted in response to rotations of the wheel. The embodiment under discussion operates on this principle, so a rotational angle $\theta_2$ of the wheel can be computed by integration of those pulses.

In this manner, the rotor angle measurement module 16 that is illustrated in Fig. 1 may calculate a measurement value of the angular phase of a motor rotor with respect to the corresponding wheel 20, based on information of a rotational angle $\theta_1$ of the motor rotor that is detected by the respective angle sensor 21 that is equipped to the respective electric motors 2 and on information of a rotational angle $\theta_2$ of the corresponding wheel that is detected by the speed sensor 22 assigned thereto. As such, failure determination can be performed without requiring the provision of a dedicated sensor, thus reducing cost.

Once a motor torque command value $T_M$ for the corresponding motor controller (i.e., motor control inverter) 12 is available, a theoretical value $\varphi_{TH}$ of the torsional angle $\varphi$ can be estimated using the formula (2). The rotor angle estimation module 17 that is illustrated in Fig. 1 may estimate the theoretical value $\varphi_{TH}$ of the torsional angle $\varphi$ using the formula (2). The difference calculation module 18 may calculate a difference between an estimate value $\varphi_{TH}$ in the form of the theoretical value $\varphi_{TH}$ and the measurement value $\varphi a$. Also, the failure determination module 19 may determine that there is an abnormality in the motor 2 or the speed reducer 3, if an absolute value of the difference between the estimate value $\varphi_{TH}$ and the measurement value $\varphi a$ is equal to or greater than the certain threshold. With only the magnitude of the difference between the estimate value $\varphi_{TH}$ and the measurement value $\varphi a$, the specific damage mode of the device cannot be ascertained. Yet, the greater the magnitude of the difference is, the more severe damage can be assumed to have occurred.

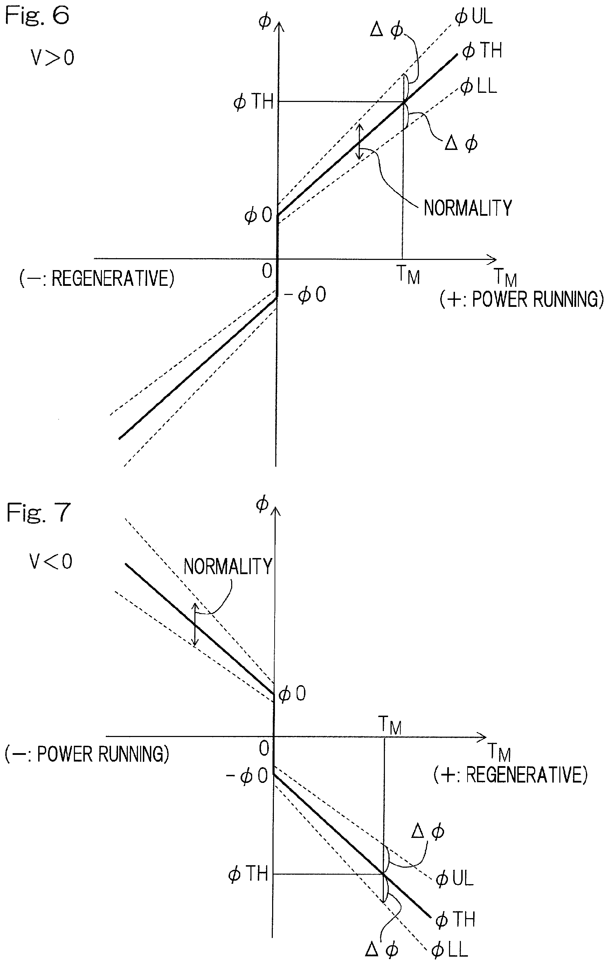

Fig. 6 and Fig. 7 show the details of such determination in a schematic fashion. Fig. 6 concerns the determination during forward travel (travel speed V > 0), while Fig. 7 concerns the determination during reverse travel (travel speed V < 0). For the sake of brevity, these figures are based on static conditions in which effects of inertia can be ignored. In such a case, a torsional angle $\varphi$ increases linearly with a motor torque command value $T_M$. Furthermore, an initial angle $\varphi_0$, which may result from backlash of gears, the play in the drive train and so on, can be used to derive a theoretical value $\varphi_{TH}$ A determination threshold $\Delta\varphi$ that represents a permissible range may be added to the theoretical value $\varphi_{TH}$ to produce a permissible upper limit $\varphi_{UL}$ of the torsional angle, whereas the determination threshold $\Delta\varphi$ may be subtracted from the theoretical value $\varphi_{TH}$ to produce a permissible lower limit $\varphi_{LL}$ of the torsional angle. Normality is declared if the measurement value $\varphi a$ of the torsional angle lies within a range between the permissible upper limit $\varphi_{UL}$ and the permissible lower limit $\varphi_{LL}$, whereas abnormality is declared if it lies outside this range. Since a torsional angle $\varphi$ increases linearly with a motor torque command value $T_M$ as described, the determination threshold $\Delta\varphi$ may be designed, similarly to this, to increase linearly with increasing of a motor torque command value $T_M$ - that is, to increase in a proportional manner with increasing of the motor torque command value $T_M$. The determination threshold $\Delta\varphi$ may be defined by taking into account measurement errors which depend mainly on the accuracy of the system of measurement. For example, $\Delta\varphi$ may be defined as $\Delta\varphi = C\varphi_{TH}$, wherein the constant C may be a value in the range of 0.01 to 0.2.

The torsional rigidity K - though it can also be theoretically computed - is preferably measured in the mounting condition on a vehicle, so that possible variance of precision of those parts can be accounted for. In one example of such measurement, the main brake (i.e., the service brakes) of the vehicle may be activated to stop the wheels, and in this state, the change of a rotational angle of a motor rotor - in response to application of a predetermined motor torque thereto - may be measured. Such measurement of K may be performed before a shipping process of the vehicle, but it should be remeasured after part(s) of the drive train such as the drive shaft 4 and/or part(s) of the motor drive device is/are replaced.

The initial angle $\varphi_0$ - though it can also be theoretically computed - is preferably measured in the mounting condition on a vehicle for similar reasons. In one example of such measurement, the main brake (i.e., the service brakes) of the vehicle may similarly be activated to stop the wheels, and in this state, a rotational angle of the motor rotor - in response to alternate application of positive and negative (power running / regenerative) motor torques of such magnitude where effects of elastic deformation can be ignored - may be measured. Such measurement of the initial angle $\varphi_0$ should be performed not only before the shipping process of the vehicle but also after possible replacement of part(s) of the drive train such as the drive shaft 4 and/or part(s) composing the motor drive device 1. Furthermore, it is desirable for the initial angle $\varphi_0$ to be periodically measured and reset because it can be affected by, for example, wear of relevant parts during the vehicle travel.

In this way, with the vehicular motor drive device that is designed in accordance with the embodiment under discussion, rapid detection of the occurrence of failure of, for example, a motor 2 in a motor drive device 1 can be performed without requiring the provision of a dedicated sensor, thus reducing cost.

More specifically, the aforementioned motor drive command generator 13, failure occurrence determiner 15, determination information output module 26 and a failure determination information display driver 29 may be configured with a hardware circuitry or software functions on a processor (not shown) which perform computations and output results by using a LUT (Look Up Table) implemented by software and/or hardware, or by using, for example, a set of predetermined transform functions stored in a software library and/or equivalent hardware thereto and, if necessary, using, for example, comparison functions and arithmetic operation functions and/or equivalent hardware thereto.

Although the failure occurrence determiner 15 in the embodiment that has been discussed is provided in an electronic control unit 11 that performs general control of the vehicle, the failure occurrence determiner 15 may instead be provided in a motor controller 12 as shown in Fig. 9. In such a case, a failure determination information output module 26 may also be provided in the motor controller 12, with the failure determination information output module 26 being configured to output failure determination information to a component external to the motor controller 12, and with the failure determination information representing a determination result provided by the failure occurrence determiner 15. Furthermore, the failure determination information display driver 29 may be provided in the electronic control unit 11, with the failure determination information display driver 29 being configured to cause the failure determination information outputted from the failure determination information output module 26 to be displayed on a display 27 such as a liquid crystal display which is provided in, for example, a console on the vehicle.

When the failure determination information output module 26 is provided, the failure determination information output module 26 may be configured to vary the failure determination information to be outputted to the external component, in accordance with a magnitude of the absolute value of the difference between the measurement value and the estimate value of the angular phase of the motor rotor with respect to the corresponding wheel 20.

Preferred implementations of the present invention have thus far been shown and described in connection with embodiments with reference to the accompanying drawings, but those embodiments disclosed herein are only illustrative, non-limiting examples in all respects. The scope of the present invention is not defined by the foregoing description but by the appended claims. Those skilled in the art would readily conceive numerous variants and modifications upon reading the instant specification, without departing from the obvious scope and sprit of the invention. Accordingly, such variants and modifications should be construed as being encompassed within the scope of the present invention that is defined by the appended claims or within a scope of equivalency thereof.

[Reference Numerals]

| | |
|---|---|
| 1 | motor drive device |
| 2 | electric motor |
| 3 | speed reducer |
| 4 | drive shaft |
| 11 | electronic control unit |
| 12 | motor controller |
| 13 | motor drive command generator |
| 14 | cooperative controller |
| 15 | failure occurrence determiner |
| 16 | rotor angle measurement module |
| 17 | rotor angle estimation module |
| 18 | difference calculation module |
| 19 | failure determination module |
| 20 | wheel |
| 21 | angle sensor |
| 22 | speed sensor |
| 26 | determination information output module |
| 27 | display |
| 28 | motor control module |
| 29 | failure determination information display driver |

**Claims**

1. A vehicular motor drive device comprising:

> a plurality of motor drive devices including respective electric motors, the motor drive devices being configured to be mounted on a vehicle in such a way to transmit rotation of each of the electric motors via a drive shaft to a corresponding left or right wheel of the vehicle; and
> a failure occurrence determiner configured to detect an occurrence of failure in the motor drive devices, the failure occurrence determiner including:

> a rotor angle measurement module configured to calculate a measurement value of an angular phase of a motor rotor with respect to the corresponding wheel, based on a rotational angle of the motor rotor that is detected by an angle sensor equipped to the respective electric motors and rotational information of the corresponding wheel that is detected by a speed sensor;
> a rotor angle estimation module configured to calculate an estimate value of the angular phase of the motor rotor of the corresponding electric motor with respect to the corresponding wheel, based on a motor torque command value for a motor controller that drives the corresponding electric motor;
> a difference calculation module configured to calculate a difference between the measurement value of the angular phase of the motor rotor and the estimate value of the angular phase of the motor rotor; and
> a failure determination module configured to determine that a failure has occurred in the corresponding motor drive device, if an absolute value of the difference is equal to or greater than a threshold.

2. The vehicular motor drive device as claimed in claim 1, wherein the rotor angle estimation module is configured to calculate the estimate value of the angular phase of the motor rotor with respect to the corresponding wheel, based on, in addition to the motor torque command value for the motor controller that drives the corresponding electric motor, a moment of inertia of the motor rotor, a torsional rigidity of a drive train, a play in the drive train, and a rotational acceleration of the motor rotor.

3. The vehicular motor drive device as claimed in claim 1 or 2, wherein the failure occurrence determiner is provided in an electronic control unit that performs general control of the vehicle.

4. The vehicular motor drive device as claimed in claim 1 or 2, wherein the failure occurrence determiner is provided in the motor controller, and the vehicular motor drive device further comprising:
a failure determination information output module that is also provided in the motor controller, the failure determination information output module being configured to output failure determination information to a component external to the motor controller, the failure determination information representing a determination result provided by the failure occurrence determiner.

**5.** The vehicular motor drive device as claimed in claim 4, wherein the failure determination information output module is configured to vary the failure determination information to be outputted to the eternal component, in accordance with a magnitude of the absolute value of the difference between the measurement value and the estimate value of the angular phase of the motor rotor with respect to the corresponding wheel.

**6.** The vehicular motor drive device as claimed in claim 1 or 2, wherein the threshold is a product of the estimate value of the angular phase of the motor rotor with respect to the corresponding wheel multiplied by a constant, the constant being a value in the range of 0.01 to 0.2.

**7.** A vehicle having the vehicular motor drive device as claimed in any one of claims 1 to 6, mounted thereon.

Fig. 1

Fig. 2

Fig. 3

EP 3 345 782 A1

Fig. 4

Fig. 5

Fig. 6

V>0

$\phi$ UL

$\Delta \phi$

$\phi$ TH

$\phi$ LL

$\phi$ TH

$\Delta \phi$

NORMALITY

$\phi$ 0

(−: REGENERATIVE)

0

$T_M$

$T_M$

(+: POWER RUNNING)

−$\phi$ 0

Fig. 7

V<0

NORMALITY

$\phi$ 0

(−: POWER RUNNING)

0

$T_M$

$T_M$

(+: REGENERATIVE)

−$\phi$ 0

$\Delta \phi$

$\phi$ UL

$\phi$ TH

$\phi$ TH

$\Delta \phi$

$\phi$ LL

Fig. 8

```
                                                    ┌─ 17
┌────────────────────────────────────────────────────┐
│           ROTOR ANGLE ESTIMATION MODULE            │
│  ┌──────────────────────┐  ┌────────────────────┐  │
│  │ DRIVE TRAIN TORSIONAL│  │ DRIVE TRAIN PLAY   │  │
│  │  RIGIDITY CALCULATOR │  │   CALCULATOR       │  │
│  └──────────────────────┘  └────────────────────┘  │
│          ┌───────────────────────────┐             │
│          │    ESTIMATE CALCULATOR    │             │
│          └───────────────────────────┘             │
└────────────────────────────────────────────────────┘
```

17a — DRIVE TRAIN TORSIONAL RIGIDITY CALCULATOR

17b — DRIVE TRAIN PLAY CALCULATOR

17c — ESTIMATE CALCULATOR

Fig. 9

## INTERNATIONAL SEARCH REPORT

| International application No. |
|---|
| PCT/JP2016/075182 |

**A. CLASSIFICATION OF SUBJECT MATTER**
*B60L3/00*(2006.01)i, *B60L15/20*(2006.01)i

According to International Patent Classification (IPC) or to both national classification and IPC

**B. FIELDS SEARCHED**

Minimum documentation searched (classification system followed by classification symbols)
B60L3/00, B60L15/20

Documentation searched other than minimum documentation to the extent that such documents are included in the fields searched
Jitsuyo Shinan Koho          1922–1996   Jitsuyo Shinan Toroku Koho   1996–2016
Kokai Jitsuyo Shinan Koho    1971–2016   Toroku Jitsuyo Shinan Koho   1994–2016

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2001-78477 A (Toshiba Corp.), 23 March 2001 (23.03.2001), paragraphs [0022] to [0026], [0036] to [0040]; fig. 1, 2, 6 (Family: none) | 1-7 |
| Y | JP 2013-46480 A (Toyota Motor Corp.), 04 March 2013 (04.03.2013), paragraphs [0008], [0070] to [0117]; fig. 1, 4 to 8 (Family: none) | 1-7 |

☒  Further documents are listed in the continuation of Box C.          ☐  See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 29 September 2016 (29.09.16) | 11 October 2016 (11.10.16) |

| Name and mailing address of the ISA/ Japan Patent Office 3-4-3,Kasumigaseki,Chiyoda-ku, Tokyo 100-8915,Japan | Authorized officer |
|---|---|
| | Telephone No. |

Form PCT/ISA/210 (second sheet) (January 2015)

**INTERNATIONAL SEARCH REPORT**

International application No.

PCT/JP2016/075182

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2009-165258 A  (Fanuc Ltd.),<br>23 July 2009 (23.07.2009),<br>paragraphs [0031] to [0033]; fig. 1 to 3<br>& US 2009/174357 A1<br>paragraphs [0036] to [0038]; fig. 1 to 3<br>& EP 2077614 A2        & CN 101477330 A | 1-7 |
| A | JP 2015-133794 A  (Daikin Industries, Ltd.),<br>23 July 2015 (23.07.2015),<br>paragraphs [0024] to [0025]<br>& WO 2015/105093 A1 | 1-7 |
| A | JP 2005-51889 A  (Toyota Motor Corp.),<br>24 February 2005 (24.02.2005),<br>entire text<br>(Family: none) | 1-7 |
| A | JP 2002-262591 A  (Hitachi, Ltd.),<br>13 September 2002 (13.09.2002),<br>paragraphs [0026] to [0033]; fig. 1 to 5<br>& US 2002/0117990 A1<br>paragraphs [0046] to [0054]; fig. 1 to 5 | 1-7 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015173565 A
- JP 2012178903 A

- JP 2014075867 A